Europäisches Patentamt

European Patent Office

Office européen des brevets

(11) Publication number: **0 174 738**
**B1**

# EUROPEAN PATENT SPECIFICATION

(45) Date of publication of patent specification: **24.10.90**

(51) Int. Cl.⁵: **H 04 N 9/72**

(21) Application number: **85305685.1**

(22) Date of filing: **12.08.85**

(54) Display device bias sensing circuit.

(30) Priority: **13.08.84 GB 8420537**
**01.10.84 US 656470**

(43) Date of publication of application:
**19.03.86 Bulletin 86/12**

(45) Publication of the grant of the patent:
**24.10.90 Bulletin 90/43**

(84) Designated Contracting States:
**AT DE FR GB IT**

(56) References cited:
**GB-A-2 122 856**
**US-A-4 263 622**

(73) Proprietor: **RCA LICENSING CORPORATION**
**2 Independence Way**
**Princeton New Jersey 08540 (US)**

(72) Inventor: **Hinn, Werner**
**Rietholzstrasse 38**
**CH-8125 Zollikerberg (CH)**

(74) Representative: **Smith, Thomas Ian Macdonald**
**London Patent Operation G.E. Technical**
**Services Co. Inc. Burdett House 15-16**
**Buckingham Street**
**London WC2N 6DU (GB)**

Courier Press, Leamington Spa, England.

**Description**

This invention concerns a sensing circuit associated with apparatus for automatically controlling the bias of an image display device.

Video signal processing and display systems such as television receivers and video monitors sometimes employ an automatic kinescope bias (AKB) control system for automatically maintaining proper black current levels for each electron gun of an associated image displaying kinescope. As a result of this operation, displayed picture colors and picture gray scale are prevented from being adversely affected by variations of kinescope bias from a desired level due to aging and temperature effects, among other factors. Various types of AKB systems are known, such as are described in U.S. patents US-A-4,263,622 and US-A-4,387,405 for example.

An AKB system typically operates during image blanking intervals when the kinescope conducts a small black level representative current. This current is sensed by the AKB system to generate a control signal representing the difference between the sensed black current level and a desired black current level, and the control signal is applied to video signal processing circuits with a sense for reducing the difference.

In many instances it is important to reduce the capacitive loading of the video output driver stage by the AKB system to avoid degrading the high frequency characteristics of the video signal. This is especially important in the case of wideband video display systems, including television receivers and video monitors.

One source of potentially excessive capacitive loading of the driver stage by the AKB system is the sensing circuit which is used to sense the kinescope black current. Various techniques for sensing the black current are known, many of which suffer from one or more disadvantages related to excessive capacitive loading, cost, complexity, or performance.

For example, one technique employs a relatively costly high voltage PNP current sensing transistor coupled to the kinescope cathode signal path for directly sensing the kinescope black current during kinescope blanking intervals, as described in U.S. patent 4,237,479 — Lavigne. Such current sensing transistor introduces substantial capacitive loading, and as such is undesirable for wideband video systems. U.S. patent 4,387,405 — Hinn discloses an AKB system wherein the kinescope black current is sensed across the load resistor of an active load circuit for the kinescope driver stage. U.S. patent 4,463,385 — Parker describes an AKB sensing circuit wherein the kinescope black current is sensed by means of a resistor coupled between the input and output transistors of a cascode kinescope driver stage. The latter two sensing techniques do not exhibit as much capacitive loading as in the case of the PNP transistor current sensor, but they use closed loop degenerative current feedback around the driver stage. Such feedback is undesirable for wideband driver stages since driver instability can result due to the high frequencies involved. A black current sensing circuit using a resistive voltage divider coupled to the kinescope cathode signal path is described in U.S. patent 4,263,622 — Hinn. This circuit exhibits little capacitive loading of the driver stage and can be used with a driver stage without current feedback. However, the resistance values of the resistors forming the voltage divider must be large to avoid excessive DC loading of the driver stage, which results in poor sensitivity. Specifically, large resistors undesirably increase the susceptibility of the sensing circuit to interference pick-up and noise, resulting in a degraded signal-to-noise factor for the sensed black current signal.

According to the invention, there is provided in a video signal processing system including an image display device for displaying video information in response to a video signal applied to an intensity control assembly thereof, apparatus comprising: a driver amplifier stage for providing a video drive signal from a load circuit of said driver stage to said intensity control assembly via a video output drive signal path; means for developing a signal representative of the magnitude of the black current conducted by said display device during image blanking intervals; sensing resistance means for sensing said black current representative signal; and control means coupled to said display device and responsive to the sensed signal from said sensing resistance means for automatically maintaining a desired bias condition for said display device in accordance with the magnitude of said sensed signal; characterized in that the load circuit of said driver stage comprises a load resistance means and the sensing resistance means connected in series between a video drive signal output terminal of the said driver stage and a source of operating potential, said sensed signal being developed across said sensing resistance means.

In a preferred embodiment, the load resistor is connected nearer to the output of the driver stage relative to the sensing resistor, and is preferably significantly larger than the sensing resistor, which is connected nearer to the source of operating potential. The sensed signal is developed across the sensing resistor.

In the drawing:

FIGURE 1 shows a portion of a television receiver including an AKB system with a sensing circuit in accordance with the present invention;

FIGURE 2 illustrates timing signal waveforms helpful in understanding the operation of the system shown in FIGURE 1; and

FIGURE 3 depicts an alternate form of the AKB system of FIGURE 1.

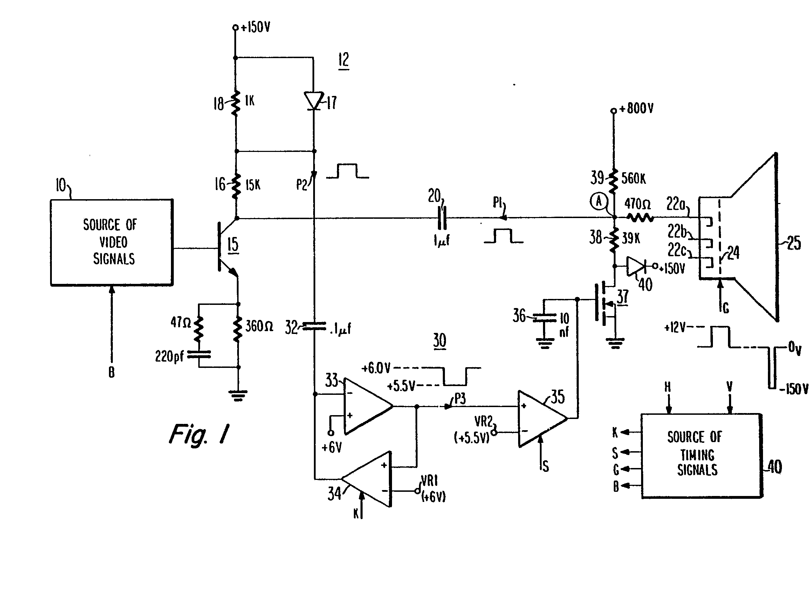

In FIGURE 1, a video signal such as of the red color signal component of a color video signal from a source 10 is amplified by a video output driver amplifier stage 12. Amplifier 12 includes a high voltage transistor 15 with a collector output circuit including a series connected load resistor 16 and a smaller value sensing resistor 18 coupled to a source of operating supply voltage (+150 volts) for transistor 15. Although both resistors 16 and 18 comprise the load for amplifier transistor 15, resistor 16 is considered to be the load resistor for transistor 15 due to its much greater value compared to resistor 18. A normally non-conductive diode 17 limits excessively large video output signal amplitude excursions during normal image intervals. An amplified video signal developed at the collector output of transistor 15 exhibits a magnitude sufficient to drive an intensity control cathode electrode 22a of a color kinescope 25, and is AC coupled to cathode 22a via a capacitor 20. In this illustration kinescope 25 is of the self-converging "in-line" gun type with a commonly energized grid 24 associated with each of separate cathode electrodes 22a, 22b and 22c. The separate cathode electrodes each form an electron gun assembly of kinescope 25 together with grid 24.

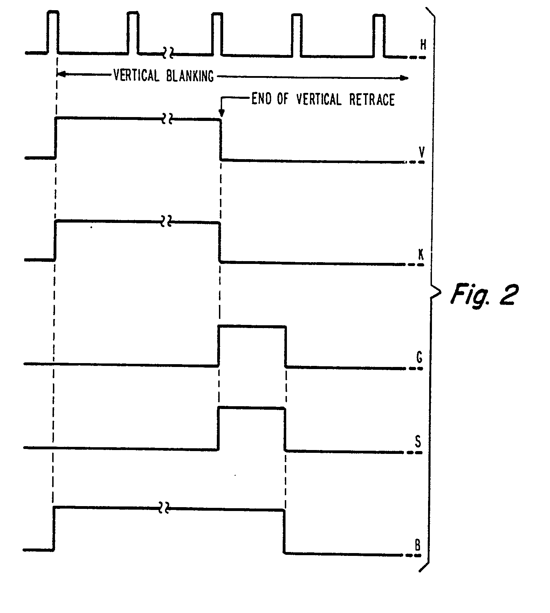

An automatic kinescope bias (AKB) control network 30 maintains a desired level of black current conduction for the kinescope electron gun assembly comprising cathode 22a. Similar AKB networks (not shown) are respectively associated with the electron guns comprising cathodes 22b and 22c which receive, e.g., the green and blue color signal components from source 10 in a manner similar to that illustrated for the red signal component. The operation of AKB network 30 will be described with regard to the AKB timing signal waveforms shown in FIGURE 2. The timing signals are generated by a source 40 in response to a horizontal image synchronizing signal H and a vertical image synchronizing signal V, both derived from deflection circuits of the receiver.

Referring to FIGURE 2 for the moment, the AKB operating interval includes a sensing interval which occurs shortly after the end of each video signal vertical retrace interval within the vertical blanking interval, during which time video signal image information is absent. During the sensing interval a positive grid drive pulse G and a positive sensing enable pulse S are generated as shown, each having a duration of approximately one horizontal image line interval in this example. Also associated with the AKB operation is a clamping interval when a clamp keying pulse K is developed, prior to pulses G and S. A blanking pulse B encompasses the AKB operating interval when pulses K, G and S are developed, and serves to establish a video signal reference condition during the AKB operating intervals.

Continuing with FIGURE 1, blanking signal B is applied to a blanking input terminal of signal source 10 to inhibit the video signal output of source 10 during AKB operating intervals. During each AKB black current sensing interval, positive grid drive pulse G forward biases grid 24 of the kinescope, thereby causing the electron gun assembly comprising cathode 22a and grid 24 to increase conduction. In response to pulse G a similarly phased, positive output current pulse is induced at cathode 22a during the grid pulse interval. The amplitude of the cathode output current pulse is related to the level of cathode black current conduction.

The induced cathode output pulse is coupled as a current pulse P1 of approximately 1 microampere via AC coupling capacitor 20 to the collector output circuit of transistor 15, where pulse P1 causes a positive voltage pulse P2 with a peak-to-peak amplitude of approximately 1 millivolt to be developed across sensing resistor 18. Transistor 15 exhibits a high collector impedance whereby current pulse P1 substantially flows through resistors 16 and 18 rather than into the collector of transistor 15.

The manner in which black current representative pulse P2 is sensed via relatively low value sensing resistor 18 results in significantly reduced loading of the kinescope driver stage. This aspect of the disclosed AKB system is particularly advantageous in a wideband system such as a video monitor. In this regard it is noted that in order for a capacitive load to be detrimental to the frequency response of the kinescope driver, it must be effective at the output of the driver (e.g., at the collector output of transistor 15), or anywhere along the signal path between the driver output and the kinescope input. The input capacitance of AKB network 30 has substantially no effect upon the high frequency response of the driver stage because of the isolation produced by relatively large load resistor 16 compared to smaller sensing resistor 18, which desirably presents a much lower impedance to the input capacitance of AKB network 30.

Pulse P2 is AC coupled via a capacitor 32 to an inverting operational amplifier 33 with a voltage gain of approximately 500, so that an amplified, inverted version of pulse P2, shown as a voltage pulse P3, appears at the output of amplifier 33. Pulse P3 exhibits a peak-to-peak amplitude of approximately 0.5 volts with respect to a positive peak pedestal reference level of +6.0 volts which is stabilized by means of a feedback clamping circuit.

The feedback clamping circuit includes an operational transconductance amplifier 34 and capacitor 32. Amplifier 34 has an inverting input (−) coupled to a source of positive DC reference voltage VR1 (+6.0 volts), a noninverting input (+) which is coupled to the output of amplifier 33, and an output coupled to capacitor 32 at the inverting input of amplifier 33. Clamping amplifier 34 is keyed to conduct by keying signal K, which immediately precedes the AKB sensing interval encompassed by pulse S, as shown in FIGURE 2. By feedback action amplifier 34 modifies the charge on coupling capacitor 32 so as to maintain the positive peak pedestal reference level of signal P3 clamped to 6.0 volts.

Clamped signal P3 is applied to a non-inverting input (+) of an operational transconductance amplifier 35 which acts as a keyed comparator. A positive DC reference voltage VR2 of +5.5 volts in this example is applied to an inverting input (−) of amplifier 35. Amplifier 35 is keyed to conduct by sense enable pulse S for sensing and comparing the peak amplitude of black current representative input signal P3 with input reference voltage VR2. If the negative-going peak amplitude of signal P3 substantially equals reference voltage VR2, the output current of amplifier 35 does not change. This corresponds to a condition of correct kinescope cathode bias wherein the existing bias of the kinescope is not altered by the AKB system.

In accordance with the principles of the invention of our concurrently filed British Patent Application GB-A-2163327 entitled "Automatic Kinescope Bias System with AC Coupled Video Output Stage", network 30 operates to restore the DC level at cathode 22a via terminal A, thereby establishing the DC bias of cathode 22a, as a function of the magnitude of signal P3.

The peak negative-going amplitude of signal P3 differs from reference voltage VR2 in accordance with the amount by which kinescope cathode bias is incorrect. Illustratively, if the amplitude of signal P3 is such that the output current of amplifier 35 is caused to increase, a related increase in charge is developed on a storage capacitor 36. The increased charge on capacitor 36 causes the conduction of a transistor 37 to increase whereby the current conducted through resistors 38 and 39 increases. Such increased current conduction causes the DC bias voltage at a node A in the cathode signal path to decrease accordingly until the correct bias condition is reached as sensed by amplifier 35. Thus the closed loop control action of the AKB feedback path including capacitor 29, resistors 16 and 18, capacitor 32, amplifiers 33 and 35, transistor 37 and resistors 38 and 39 stabilizes the peak amplitude of signal P3 at a level of VR1-VR2, corresponding to the correct black level kinescope bias condition.

In this example a correct bias condition corresponds to current pulse P1 with a peak amplitude of approximately 1 microampere, voltage pulse P2 with a peak amplitude of approximately 1 millivolt, and voltage pulse P3 with a peak amplitude of approximately +0.5 volts. By feedback action network 30 will maintain such amplitude levels by modifying the voltage at node A to compensate for a sensed incorrect bias condition. Negligible loading by DC restoration network 30 at video signal node A can be achieved by choosing resistors 38 and 39 with low end-to-end parasitic capacitance, such as carbon film resistors. A normally non-conductive protection diode 40 prevents high voltage breakdown of transistor 37.

Normal blacker-than-black blanking to suppress the kinescope beam spot during periodic horizontal and vertical image retrace intervals is accomplished by means of a negative going −150 volt pulse applied to kinescope grid 24, rather than by blanking the video signal prior to the kinescope driver amplifier. This method of blacker-than-black retrace blanking eliminates the need for the kinescope driver to accommodate the operating point shifts otherwise associated with blacker-than-black retrace blanking.

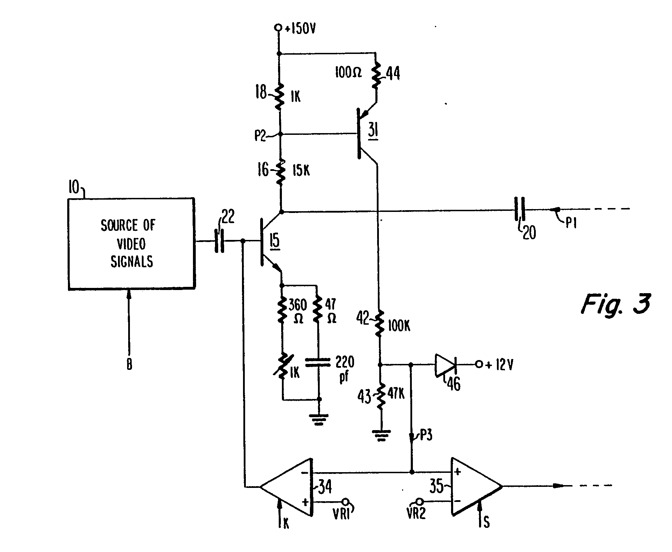

FIGURE 3 shows an alternate form of a portion of the AKB system of FIGURE 1, wherein corresponding elements are identified by the same reference number, and the leads identified by dashed lines connect to the same places as corresponding leads in FIGURE 1. The arrangement of FIGURE 3 differs from that of FIGURE 1 with respect to the manner in which clamping is accomplished, and with respect to the manner in which signal P2 is amplified to produce signal P3.

In FIGURE 3, both black current representative signals P2 and P3 are clamped by means of a keyed feedback clamping circuit including keyed amplifier 34 together with a video signal input capacitor 22 which AC couples video signals to the base input of driver transistor 15. The signal gain imparted to signal P2 to produce signal P3 is provided by means of a circuit including a PNP amplifier transistor 31 with collector output resistors 42 and 43 and an emitter resistor 44. The desired signal gain of approximately 500 is determined by the ratio of the value of resistor 43 to that of resistor 44. Resistor 42 serves to reduce the power dissipation in transistor 31 by reducing its collector-to-emitter voltage, thereby permitting use of a small, inexpensive plastic type transistor for transistor 31. A normally non-conductive protection diode 46 prevents high voltage breakdown of amplifiers 34 and 35.

In both of the FIGURE 1 and FIGURE 3 arrangements, manual pre-adjustment of picture gray scale balance can be achieved by varying reference voltage VR2 while maintaining reference voltage VR1 constant. This would permit black level pre-adjustment over a small range, such as may be required in certain applications such as precision video monitors.

The described sensing circuit including resistors 16 and 18 can be used with both AC coupled and DC coupled kinescope drivers, and in wideband signal applications smaller values of resistors 16 and 18 could be used to increase the high frequency response of driver 12. Smaller values of sensing resistor 18 require that a correspondingly higher gain be provided by amplifier 33 (FIGURE 1) or the circuit including transistor 31 (FIGURE 3) to obtain a desired AKB system sensitivity. A practical limit on the smallest value of resistor 18 is determined by the signal gain available from amplifier 33 or transistor 31, and by the signal-to-noise ratio at the output of amplifier 33 or transistor 31. A practical limit on the largest value of resistor 18 is determined by the voltage drop developed across resistor 18, which voltage drop should not consume too much of the available dynamic range for the video signal, and by the total impedance provided by resistors 16 and 18, which determines the bandwidth of the driver stage.

In addition, a cascode amplifier arrangement could replace driver transistor 15, and the sensing arrangement including resistors 16 and 18 could be used in the collector circuit of an active load transistor included in the output circuit of a kinescope driver amplifier. An active load type kinescope driver amplifier is shown, for example, in U.S. patent US-A-4,387,405.

The kinescope black current sensing circuit disclosed herein advantageously substantially reduces capacitive loading of the kinescope driver stage, provides a sensed black current signal at relatively low impedance for improved noise and interference immunity, and is uncomplicated and inexpensive.

## Claims

1. In a video signal processing system including an image display device (25) for displaying video information in response to a video signal applied to an intensity control assembly (22, 24) thereof, apparatus comprising:

a driver amplifier stage (12) for providing a video drive signal from a load circuit of said driver stage to said intensity control assembly (22, 24) via a video output drive signal path (20);

means (40,G) for developing a signal (P1) representative of the magnitude of the black current conducted by said display device during image blanking intervals;

sensing resistance means (18) for sensing said black current representative signal; and

control means (33, 34, 35, 36, 37, 38, 39, 40) coupled to said display device and responsive to the sensed signal (P2) from said sensing resistance means for automatically maintaining a desired bias condition for said display device in accordance with the magnitude of said sensed signal; characterized in that

the load circuit of said driver stage comprises a load resistance means (16) and the sensing resistance means (18) connected in series between a video output terminal of the said driver stage and a source of operating potential, said sensed signal (P2) being developed across said sensing resistance means.

2. Apparatus according to Claim 1, wherein said load resistance means (16) is connected nearer to said video drive signal output terminal relative to said sensing resistance means and said sensing resistance (18) means is connected nearer to said source of operating potential; and

said sensed signal (P2) is derived from a point between said load and sensing resistance means.

3. Apparatus according to Claim 1 or 2, wherein the value of said sensing resistance (18) means is significantly less than the value of said load resistance (16) means.

4. Apparatus according to Claim 1, 2 or 3 wherein said driver stage comprises a video signal amplifier transistor (15) with a collector output coupled to said video output terminal.

5. Apparatus according to Claim 1, 2, 3 or 4 wherein the display device is a kinescope and the intensity control assembly comprises a cathode electrode and a grid electrode, and the developing means excites the intensity control assembly to produce the said signal representative of the magnitude of black current.

6. Apparatus according to Claim 5, wherein said video drive signal is provided to said cathode electrode (22); and

said grid electrode (24) is excited to induce the said black current representative signal at said cathode electrode.

7. Apparatus according to any preceding claim, wherein the said load and sensing resistance means are resistors.

## Patentansprüche

1. Einrichtung in einem Videosignalverarbeitungssystem mit einer Bildwiedergabevorrichtung (25) zum Wiedergeben von Videoinformation als Reaktion auf ein Videosignal, das einer Intensitätssteueranordnung (22, 24) der Bildwiedergabevorrichtung zugeführt ist, mit:

einer Treiberverstärkerstufe (12) zum Liefern eines Videotreibersignales von einem Lastkreis der Treiberstufe an die Intensitätssteueranordnung (22, 24) über einen Videoausgangstreibersignalweg (20);

einer Anordnung (40,G) zum Erzeugen eines Signales (P1) welches für die Größe des Schwarzstromes repräsentativ ist, den die Wiedergabevorrichtung während Bildaustastintervallen führt;

einer Abfühlwiderstandsanordnung (18) zum Abfühlen des für den Schwarzstrom repräsentativen Signales und

eine Steueranordnung (33, 34, 35, 36, 37, 38, 39, 40) die mit der Wiedergabevorrichtung gekoppelt ist und auf das abgefühlte Signal (P2) von der Abfühlwiderstandsanordnung anspricht, um automatisch einen gewünschten Vorspannungszustand für die Wiedergabevorrichtung entsprechend der Größe des abgefühlten Signales aufrechtzuerhalten, dadurch gekennzeichnet, daß der Lastkreis der Treiberstufe eine Lastwiderstandsanordnung (16) enthält und die Abfühlwiderstandsanordnung (18) in Reihe zwischen einen Videoausgangsanschluß der Treiberstufe und eine Betriebspotentialquelle geschaltet ist, wobei das abgefühlte Signal (P2) an der Abfühlwiderstandsanordnung entwickelt wird.

2. Einrichtung nach Anspruch 1, bei welchem die Lastwiderstandsanordnung (16) näher am Videotreibersignalausgangsanschluß angeschlossen ist als die Abfühlwiderstandsanordnung und daß der Abfühlwiderstand (18) näher an der Betriebspotentialquelle angeschlossen ist, und

daß das abgefühlte Signal (P2) von einem Punkt zwischen der Last- und der Abfühlwiderstandsanordnung gewonnen wird.

3. Einrichtung nach Anspruch 1 oder 2, bei welcher der Wert der Abfühlwiderstandsanordnung (18) erheblich kleiner ist als der Wert der Lastwiderstandsanordnung (16).

4. Einrichtung nach Anspruch 1, 2 oder 3, bei welcher die Treiberstufe einen Videosignalverstärkertransistor (15) mit einem an den Videoausgangsanschluß gekoppelten Kollektorausgang enthält.

5. Einrichtung nach Anspruch 1, 2, 3 oder 4, bei welcher die Wiedergabevorrichtung eine Bildröhre ist und die Intensitätssteueranordnung eine Kathodenelektrode und eine Gitterelektrode enthält, und die Erzeugungsanordnung die Intensitätssteuerelektrode zur Erzeugung des Signales erregt, welches für die Größe des Schwarzstromes repräsentativ ist.

6. Einrichtung nach Anspruch 5, bei welcher das Videotreibersignal an die Kathodenelektrode (22) geliefert ist und

die Gitterelektrode (24) so erregt wird, daß sie das für den Schwarzstrom repräsentative Signal an der Kathodenelektrode hervorruft.

7. Einrichtung nach einem der vorhergehenden Ansprüche, bei welcher die Last- und die Abfühlwiderstandsanordnung Widerstände sind.

## Revendications

1. Dans un système de traitement de signaux vidéo comprenant un dispositif de visualisation de l'image (25) pour visualiser une information vidéo en réponse à un signal vidéo appliqué à un assemblage de réglage de l'intensité (22, 24), un appareil comprenant:

un étage amplificateur d'attaque (12) pour produire un signal d'attaque vidéo d'un circuit de charge dudit étage d'attaque audit assemblage de réglage de l'intensité (22, 24) via un trajet de signaux d'attaque vidéo de sortie (20);

un moyen (40,G) pour développer un signal (P1) représentatif de la grandeur du courant du noir conduit par ledit dispositif de visualisation pendant les intervalles d'effacement de l'image;

un moyen formant résistance de détection (18) pour détecter ledit signal représentatif du courant du noir; et

un moyen de réglage (33, 34, 35, 36, 37, 38, 39, 40) couplé audit dispositif de visualisation et répondant au signal détecté (P2) par ledit moyen formant résistance de détection pour maintenir automatiquement une condition de polarisation souhaitée pour ledit dispositif de visualisation selon la grandeur dudit signal détecté; caractérisé en ce que le circuit de charge dudit étage d'attaque comprend un moyen formant résistance de charge (16) et le moyen formant résistance de détection (18) qui sont reliés en série entre une borne de sortie vidéo dudit étage d'attaque et une source de potentiel de fonctionnement, ledit signal détecté (P2) étant développé aux bornes dudit moyen formant résistance de détection.

2. Appareil selon la revendication 1, où ledit moyen formant résistance de charge (16) est connecté plus près de ladite borne de sortie du signal d'attaque vidéo relativement audit moyen formant résistance de détection et ledit moyen formant résistance de détection (18) est connecté plus près de ladite source de potentiel de fonctionnement; et

ledit signal détecté (P2) est dérivé d'un point entre lesdits moyens formant résistances de charge et de détection.

3. Appareil selon la revendication 1 ou 2, où la valeur dudit moyen formant résistance de détection (18) est considérablement plus faible que la valeur dudit moyen formant résistance de charge (16).

4. Appareil selon la revendication 1, 2 ou 3 où ledit étage d'attaque comprend un transistor amplificateur de signaux vidéo (15) avec une sortie de collecteur couplée à ladite borne de sortie vidéo.

5. Appareil selon la revendication 1, 2, 3 ou 4, où le dispositif de visualisation est un tube-image et l'assemblage de réglage de l'intensité comprend une électrode de cathode et une électrode de grille et le moyen de développement excite l'assemblage de réglage de l'intensité pour produire ledit signal représentatif de la grandeur du courant du noir.

6. Appareil selon la revendication 5, où ledit signal d'attaque vidéo est appliqué à ladite électrode de cathode (22); et

ladite électrode de grille (24) est excitée pour induire ledit signal représentatif du courant du noir à ladite électrode de cathode.

7. Appareil selon toute revendication précédente, où lesdits moyens formant résistances de charge et de détection sont des résistances.

Fig. 1

Fig. 2

Fig. 3